# EUROPEAN PATENT SPECIFICATION

(11) **EP 2 417 859 B1**
(45) Date of publication and mention of the grant of the patent: **12.03.2014**
(21) Application number: 11720609.4
(22) Date of filing: 25.01.2011
(51) Int. Cl.: A23J 1/00, A23J 3/00

(54) **CONCENTRATED PROTEIN PRODUCTS AND METHODS FOR PRODUCING SAME**
KONZENTRIERTE PROTEINPRODUKTE UND VERFAHREN ZU IHRER HERSTELLUNG
PRODUITS PROTÉIQUES CONCENTRÉS ET LEURS PROCÉDÉS DE PRODUCTION

(30) Priority: 07.12.2009 RU 2009145043
(43) Date of publication of application: 15.02.2012
(73) Proprietor: Ponomarev, Vasily Vasilievich, Moscow 117049 (RU); Bikbov, Takhir Mukhammedovich, Moscow 117463 (RU)
(72) Inventor: Ponomarev, Vasily Vasilievich, Moscow 117049 (RU); Bikbov, Takhir Mukhammedovich, Moscow 117463 (RU)
(74) Representative: Bucher, Ralf Christian
(86) International application number: PCT/RU2011/000035
(87) International publication number: WO 2011/078746

(56) References cited:
- EP-A1- 0 459 566
- WO-A1-2007/073188
- BE-A1- 884 264
- US-A- 4 410 554
- US-A- 4 636 388

## Description

### Technical Field

The invention is related to concentrated protein products and methods for preparing the same from sources of plant origin intended for use in various industries, preferably in the food industry (meat and dairy products, canning, bread, pasta, confectionery, and food concentrates), pharmaceutical industry for drug making, mixed feed industry for producing feeds, chemical, and other manufacturing industries.

### Background Art

Seeds and byproducts of soybeans, wheat, oats, peanuts, lupine, flax, rape, sunflower seeds, and other primary plant material sources are widely used for preparing concentrated protein products. These products include, for example, protein concentrates (60% to 75% of protein) and isolates (more than 80% of protein) of soy, peanuts, lupine or other farm crops.

S. Berot and A. Davin offered a review of existing methods for preparing concentrated protein products from various primary material sources in Chapter 9 entitled "Techniques of Extracting and Purifying Plant Protein Products" of the book "Plant Protein" (published by Agropromizdat, Moscow, in 1991, editor T.P. Mikulovich, translated from the French by V.G. Dolgopolov). The most significant modern industrial methods for preparing protein products from soybeans are described in the "Practical Handbook of Soybean Processing and Utilization" edited by D.P. Erickson, published by AOCS Press and United Soybean Board in 1995.

The above-referenced books show that the industrial processes for preparing concentrated protein products used extraction from the above primary material sources by aqueous solvents.

Concentrates are produced by using reagents preventing dissolution of source proteins, for example, acids having pH values close to the isoelectric point of material proteins, alcohols, and other reagents, or under specific extraction conditions such as, for example, pretreatment or extraction at a high temperature causing denaturalization of proteins and their conversion to an insoluble state.

An example of one kind of pretreatment is described in "Preparation of Soy Protein Concentrate and Isolate from Extruded-Expelled Soybean Meals" by H. Wang, L, A1 Johnson and T. Wang in the Journal of the American Oil Chemists Society, 2004, 81(7), 713-717. Concentrated protein products are prepared by pretreating soybean meal and white petal at a moisture content of 10% to 12% in an extruder-expeller for 15 to 30 seconds at a temperature of 135°C to 140°C and a pressure of 20 to 50 atm. Extraction then followed a common procedure. Pretreatment of this type helps expand the range of primary materials suitable for preparing concentrated protein products.

Reagents such as alkalis or salts facilitating protein conversion into solution in materials containing highly soluble proteins contribute to the preparation of protein isolates.

The highest yield of protein concentrates and isolates is achieved by multiple material extraction. It is more difficult, though, to obtain isolates because a product with a high protein content requires additional thorough purification by, as a rule, multiple sedimentation of proteins from their alkaline solutions by acids, or by other techniques, such as, for example, ultra-filtration.

Because of the need to have a highly dispersed source material to maintain an acceptable rate of diffusion processes, achieve economically justified yields of target products requiring multiple extraction of source materials, and give acceptable functional properties to the end products, processes to prepare concentrated protein products are performed on many equipment items and are complicated and expensive.

According to the existing modern paradigm for preparing concentrated protein products, they all are a mixture of native and aggregated forms of proteins of primary material used. Rehydration of dried protein product forms results, as a rule, in dissolution of a proportion of their proteins.

EP0459566 A1 discloses a translucent, thixotropic non-particulate denatured protein containing aqueous gels. Also a process for the preparation of these gels is disclosed. The gels can be incorporated in food products and in cosmetics.

According to US 4 636 388 a purified protein particularly adapted for enzymatic hydrolysis can be prepared by gelling the protein followed by breaking the gel into particles and washing the particles in sufficient liquid to allow portions of the nonproteinaceous material in the gel matrix to diffuse into the liquid.

WO 2007/073188 A1 relates to a process of preparing a mixed gel system, containing at least one globular protein, at least one polysaccharide and at least 50 wt. % water, and comprising at least two distinct aqueous phases that are in direct contact, including a proteinaceous gelled phase and a non-proteinaceous aqueous phase.

US 4 410 554 A discloses an aqueous process for the production of soy protein concentrates which possess many of the functional attributes of soy protein isolates. In producing the soy concentrate, parameters are controlled in the aqueous leaching and separating, neutralization, pastuerization and drying steps which are performed in the order recited.

### Disclosure of Invention

The technical result achieved by using the claimed invention consists in simplifying, and lowering the costs of, the process for preparing concentrated protein products and raising its efficiency by increasing the fullness and rate of extraction, and also in obtaining an end product having neutral organoleptic characteristics, including absence of specific taste and flavor, for example, soy smell and taste (bitter, bean taste).

This technical effect is achieved in a method for preparing concentrated protein products in which gels are produced at the first stage thereof from aqueous suspensions of the primary material source at a concentration exceeding the critical concentration of gelation by gelation methods and extracted at the second stage with solvents that extract the sol fraction to obtain the target product that is a gel fraction having a three-dimensional net framework that consists of protein molecules. The surface area of the gels may be increased by addition of food loosening agents, rapid reduction in pressure, or by the cryotropic effect. Performance of the method results in protein products in the form of gel fractions, their three-dimensional net framework consisting of protein molecules.

Efficiency - fullness and rate of extraction - is raised by increasing the gel surface area by steps accepted in the food industry, such as water vapor explosion (as pressure is dropped rapidly, for example, following autoclaving, extrusion, super-fast heating in a microwave field, and so on), freezing and subsequent removal of water from the microporous sponge gel, addition of food loosening agents, such as ammonium carbonate, and other methods.

Concentrated protein products prepared by the claimed method are close in chemical composition to products called traditionally protein concentrates and isolates because they contain between 60% and 90% of protein, or more. They have, however, a number of significant distinctions from traditional products.

Their specific molecular architecture is their first distinction. They are gels, which means that they are built around spatially organized integrated protein nets containing a solvent, rather that an assemblage of independent macromolecules as they are in traditional protein concentrates and isolates. For this reason, they are not soluble in common aqueous food solutions and are in a finitely swollen state in them.

They do not practically contain soluble substances, or their quantity is negligibly small (under 1.5%), and this is their another unique distinction. Actually, they do not contain the sol fraction. In other words, they are gels consisting of the gel fraction only.

These unique distinctions of their structure are due to the special mechanism on which their preparation is based.

According to the claimed method for manufacturing protein products, suspensions of primary material sources at a relatively high concentration exceeding the critical concentration of gelation are used at the first gelation stage. Gelation is preceded by preliminary denaturalization of protein molecules, followed by aggregation thereof that is equivalent to phase stratification in the concentrated system. Further, proteins mostly in the form of a spatially cross-linked gel-like net are concentrated in one of the phases, and the remaining system components are concentrated in the other phase. It is common knowledge that increase in the initial suspension concentration upon phase stratification leads to change in the phase composition of the system and to an increase in the concentrations of the prevailing macromolecular components in the phase, that is, proteins in the protein phase or gel fraction, and polysaccharides, other carbohydrates, and other components of the system in the other phase. To put it differently, the further the primary material concentration is from the critical concentration of gelation, the more protein-concentrated the gel fraction becomes, and the higher the concentration of the remaining soluble components of the sol fraction grows. As a result, the content of protein substances in the sol fraction decreases and, therefore, their loss through subsequent extraction decreases significantly as well. It is, therefore, preferable from the practical viewpoint to use concentrated suspensions of primary material sources. This is also preferable as well from the viewpoint of stronger three-dimensional nets forming their gels. Owing to their higher mechanical strength, the gels produced are capable of retaining their geometrical shape and integrity during subsequent extraction processes.

Localization of primary material components in different phases, conversion of the protein phase to an insoluble state, and concentration of non-protein impurity components in the sol fraction lead to yet another important result. Since the three-dimensional netlike protein structure binds a portion of the total quantity of the system solvent, the sol fraction only contains a part of the total quantity. The real local concentration of sol fraction components is significantly higher than their concentration intended to take in all the solvent. Subsequent extraction causes the concentration gradient between the extracting agent and the sol fraction to grow, and, therefore, the efficiency (rate and fullness) of their extraction rises significantly.

It is also a commonly accepted fact that the extraction rate rises considerably with an increase in the area of contact between the extracting agent and the extract, such as gels in this case. A highly developed surface can be produced in concentrated protein products according to the claimed invention by several methods.

One of these methods is thermotropic gelation in the presence of loosening food salts. This method uses suspension of protein sources such as, for example, functional protein concentrate or isolate of soy, sunflower seeds, and lupine. A 15% suspension of such protein products in a 0.2% solution of ammonium bicarbonate is prepared at a temperature of 20°C to 25°C. The prepared suspension is immersed in boiling water for 30 minutes. The resultant gel is cooled in running water to room temperature. The result is a highly porous gel having a developed surface. The gel is extracted as is common practice.

In another example, a highly porous gel is produced under high pressure and given a highly porous structure cryotropically. A suspension of, for example, soy isolate at 10% concentration is poured into a container and placed in a chamber in which pressure is built up to 6,000 atm at a temperature of 250°C. After 15 minutes in the chamber, pressure is reduced to atmospheric pressure. The gel, however, does not foam and retains its shape and volume. The resultant gel is placed on trays, frozen, and dried on a sublimation dryer to a final moisture content of 3%. The xerogel thus produced is a highly porous lightweight and fluffy product. The remaining stages of the claimed process are carried out as is standard in the industry.

Alternatively, baro-thermotropic gelation can be used, in which a 60% suspension of defatted peanut meal containing 53.2% of protein is processed at PDI= 90%. The resultant mass is compacted in a mold at room temperature in a hydraulic press into a flat rectangle 1 cm thick under a pressure of 10 kg/cm². The resultant mass is them placed in an autoclave and processed at a temperature of 138.2°C and pressure of 2.5 kg/cm² for 15 minutes. Processing completed, pressure is released over a period of 1.5 to 2 minutes. The output is elastic gel of porous sponge structure 2 cm thick. The remaining stages of the claimed methods are carried out as is standard in the industry.

The above specifics of the concentrated protein products obtained in accordance with the claimed invention make them radically distinct from the traditional protein concentrates and isolates. Moreover, the traditional concentrates and isolates can be used for preparing concentrated protein products by the claimed method as primary material sources.

For example, 18.3% sol fraction is removed from the functional soy concentrate gel (65% of protein) at 16% concentration produced at a temperature of 100°C over 30 minutes by water extraction (10 parts of water per 1 part of gel for 1 hour at a temperature of 50°C). The residue that is a gel fraction containing 72.4% of protein is dried in soft conditions by lyophilization to yield the end product at a hydration ratio of 6.3 g of H₂O/g of the product. This ratio in the initial product is equal to 3.5 g of H₂O/g of the product, so the end product is of a different quality.

A sol fraction comprising 5.6% of the initial protein isolate mass is extracted from the gel produced from suspended isolate of, for example, soy protein (with a protein content of 90.3%) at a 15% concentration in conditions similar to the above. The protein content in the end product reaches 93.8%. Fully in accordance with the gelation theory, the sol fraction lost consists mostly of protein aggregates that are not involved in gel net formation. This is undesirable from the practical viewpoint, even though the product acquires new functional properties as well. The hydration ratio of its preparation dried by sublimation is equal to 9.6 g of H₂O/g of the product.

Reduced content of lipids (under 0.3%) in the concentrated protein products prepared by the claimed method is their unique quality. A majority of modern protein concentrates and isolates have lipids in excess of 0.6% to 0.7%. It may be assumed for this reason that lipids are extracted in emulsions as part of the gel sol fraction.

This specificity of the claimed method for preparing concentrated protein products makes protein material sources with an initial lipid content of up to 10% suitable for this invention. In particular, protein types of meal derived from soy, sunflower seeds, cottonseeds, and other kinds of primary materials produced by the so-called cold pressing method turn into promising options for performing the claimed method. Following extraction with aqueous solutions, they do not contain lipids and even acquire a lighter shade of color, with their specific taste and flavor characteristics leveled out appreciably, that is, their overall organoleptic attraction improves significantly and they can be stored dry for long time periods.

The stiff protein net framework and absence of soluble biopolymer substances in the product facilitate product drying and, more important, its subsequent quick rehydration greatly. When a concentrated soy product prepared by the claimed method was dried in a vacuum dryer at 80°C, it swelled rapidly within 5 minutes. It had a hydration ratio of 3.9 g of H₂O/g of the product. The same hydration ratio was obtained after drying in an infrared dryer at the same temperature and in the same hydration conditions after 20 minutes of swelling. Attempts to dry traditional protein concentrates and isolates in the above-mentioned conditions resulted in a significant loss of their solubility and swelling. Their hydration ratio in similar test conditions did not exceed 2.5 g of H₂O/g of the product, and the degree of swelling of product samples fell by almost a half.

The above-mentioned typical properties and specifics of products and the method for preparing the same are of immense practical value.

Concentrated protein products prepared by the claimed method have, in the first place, neutral organoleptic characteristics in comparison with both the primary material sources and a majority of traditional protein concentrates and isolates available on the market today. This is commonly recognized today as one of the central problems limiting their use in many segments of the food industry. In particular, they have a very specific taste and flavor, such as soy flavor and taste (bitter, bean flavor), that are looked upon negatively by most food processors and end users.

Clearly, the molecular architecture of concentrated protein products prepared in the form of a gel fraction according to the claimed invention influences their functional characteristics and suggests areas where they are used practically. Products of this type are expected in practice to have a narrow range of functional properties. The claimed invention allows concentrated protein products in the form of gel fractions to be used as additives and fillers, for example, in processed meat products, to control protein content in final compositions and regulate their consistency, reduce loss of moisture and fats on heat treatment by maintaining the calculated strong molecular water bonding thereby. Practical testing of this application of these products has shown that they allow protein content in, for example, prepared minced meat products, to be increased considerably, improve their consistency, taste, and flavor significantly, reduce loss of moisture and fat in standard compositions of these products during heat treatment and storage in the frozen condition.

The functional characteristics of these products are a strong enough argument in favor of their use as very valuable protein additives in, for example, dry breakfasts, confectionery, snack bar sticks, athletic, dietetic, and curative foods, and for many other purposes of balanced rational nutrition.

As indicated above, it is preferred to use concentrated (over 50%) suspensions of primary materials for preparing concentrated protein products because of lower losses and high end product yields. The highly developed surface and highly porous structure of the product facilitate diffusion processes and extraction of the sol fraction. Fulfilling these conditions for carrying out the present invention helps achieve a further important positive effect, in particular, end products are prepared by common techniques, that is, first, the claimed invention simplifies significantly the preparation of concentrated protein products similar to protein isolates and, second, no acids and alkalis are required in the product preparation process for multiple protein precipitation.

Suspensions of highly porous swollen gels having a highly developed surface in the form of macroscopic (2 to 20 mm or more) lumps of varied form are separated by any known method, such as, traditional filtration in vacuum or using no vacuum. When filtering materials having relatively small pores, and yet several orders of magnitude larger than the traditional materials used, for example, for ultra-filtration (with 100 µm pores), the products obtained are similar to protein concentrates, and when the filtering material has larger pores (1 to 3 mm, depending on the gel particle size), the end products are similar to protein isolates. This unique specific of the claimed invention allows, depending on current demand, the same equipment to be used to turn the same kind of primary material into products closely resembling protein concentrates and isolates in the form of gel fractions, with only the filtering material replaced. This specific quality of the claimed invention enables the use of both existing equipment in traditional methods for preparing concentrated protein products and simpler and cheaper equipment. Gel and sol fractions can be separated in decanters and simpler devices used widely in the food industry, in particular, press filters, belt presses, nutsch filters, and filtering centrifuges. This possibility is lacking in traditional equipment for producing both protein concentrates and protein isolates.

### Modes for Carrying out the Invention

The idea of the claimed invention will be clear from the following examples:

### Example 1

Defatted soy meal at a protein solubility index of 95% was mixed with distilled water to produce a thick suspension at 35% dry matter concentration. The resultant thick suspension was poured into a mold and compressed until a thick homogenous mass in the shape of a cylinder 20 mm in diameter and 100 mm high was formed, closed tightly, and held for 1 hour.

The mold was then placed in a water bath at a temperature of 98°C and held therein for 30 minutes. The mold was removed from the water bath and cooled in running water to a temperature of 8°C to 10°C, and the thick gel formed was removed from the mold and sliced into thin plates 1 mm thick.

The sliced gel plates were placed in a glass retort and distilled water was poured in at a ratio of plates to water of 1 to 8, and the retort was put on a rocker that reciprocated the suspension at a temperature of 23°C for 10 minutes.

The resultant suspension of gel particles, with the gel framework formed by a three-dimensional protein net (gel fraction) and aqueous extract of soluble meal substances, was filtered in a laboratory vacuum filter through a paper filter No. 0. The insoluble residue (gel fraction) was rinsed in the filter with distilled water (2 parts of water for the initial dry meal). The resultant product was dried in a vacuum cabinet at a temperature of 50°C.

The product obtained after drying was a protein concentrate in composition containing 60.2% of protein and 32.3% of carbohydrates in terms of absolutely dry matter. The concentration of protein substances in the product was relatively low because low-molecular weight soluble substances were mostly removed in the above conditions. Still, a dry protein concentrate sample had a light yellowish-cream color giving off no specific soy flavor and a neutral taste. Its rehydration in an excess of distilled water at a ratio of the concentrate to water of 1 to 10 for 30 minutes caused it to swell to a limited extent and to form swollen gel-like particles (1 weight part of the product absorbed 2.1 parts of firmly bound water that was measured after suspension sample centrifuging at 5,000 g for 30 minutes as a ratio of the absorbed water mass to the mass of the dry protein concentrate sample). This ratio remained unchanged during prolonged swelling for 3 hours. The water added to make the sample swell had practically no color and remained transparent during the entire period of observation over the swelling process, radically distinguishing the behavior of this product from the concentrates traded on the Russian market. When these concentrates were put through similar comparative tests, nontransparent suspensions were formed, with their aqueous phase having a viscosity significantly higher than that of water, which was evidence of a relatively large share of soluble substances, such as both biopolymer molecules and some low molecular weight colorants in the suspensions.

### Example 2

Defatted soy meal at a solubility index of 95% was mixed with drinking water in a high-speed mixer, its sharp knife blades rotating at 3,000 r.p.m., until a moistened conglomerated friable mass at a 55% concentration was obtained.

The resultant mass was placed in a cylindrical mold and pressed at 60 kg/cm² and a temperature of 165°C for 15 seconds, and extruded through dies having 1 mm apertures. Long vermicelli-like semitransparent yellow threads were obtained at the die outlet. The bundle of extruded threads, with a three-dimensional protein net as their framework, was received in a thermostatically controlled vessel filled with drinking water at a temperature of 60°C. The quantity of the material received in the vessel was brought to a ratio of material to water of 1 to 6 and allowed to stand for 45 minutes at light stirring. The vessel contents was poured onto a screen filter having apertures 1 mm in diameter. The insoluble residue on the filter was rinsed with drinking water at a ratio of material to water of 1 to 2 in terms of the quantity of initial soy meal. The resultant insoluble residue that was the gel fraction was dried in a vacuum drying cabinet at a temperature of 90°C. The resultant product was comminuted to 200 µm particles, yielding a light-cream powder containing 64.3% of protein at a hydration ratio of 3.1. When swelled in water, it formed thin semitransparent gel-like insoluble particles that swelled to a limited extent in water to the above-mentioned hydration coefficient.

The pressed gel-like threads were cut into fragments 2 cm long and then dried in a thin layer in an infrared dryer for 6 hours, yielding very hard thin rods. They were subsequently extracted and an end product or gel fraction obtained in the conditions of this example both immediately after drying and after dry storage for four weeks to yield results similar to what is described above in terms of product hydration and protein content therein.

### Example 3

Defatted by hexane, soy meal containing 52.2% of protein, with an NSI index of 72.9, was extruded in a Russian-made Stak 72 two-screw extruder having four zones provided with electrical heating and water cooling elements, at a rate of 492 kg/hour through dies having 1.2 mm apertures at a temperature of 185°C and pressure of 70 kg/cm² in the last, output zone of the extruder. Water was added through sprayers to the extruder intake chamber at a rate maintaining the moisture content of the mass being extruded at 25%. The moistened mass was processed in the extruder cylinder for 35 seconds.

The processed mass emerged from the die in the form of a bundle of gel-like threads, with a three-dimensional tightly cross-linked protein net as their framework. As the threads were out in the ambient they expanded (compared to the diameter of the die outlet aperture) because of the large pressure difference and acquired the shape of a laminated fibrous foamed textured material of up to 3.0 mm in diameter that was cut up by rotary knives into pieces (textured granules) of cylindrical shape 3 to 5 mm long. Some of the water contained in the granules coming out of the extruder evaporated as steam that distilled a significant part of the specific taste and flavor substances of the initial soy meal. The textured granules had a residual moisture content of around 17.0% and a temperature of almost 95°C.

### Processing Variant A

The resultant granules were loaded into a vessels having an anchor mixer rotating at 60 r.p.m. together with water to achieve a ratio of gel-like extrudate to water of 1 to 6 and stirred for 10 minutes, and the granule suspension was separated in a flow-through centrifuge at a separation factor of 2,500 g. Similar treatment in countercurrent extraction conditions was repeated twice. The gel fraction residue obtained by pressure treatment was dried at a temperature that did not exceed 75°C in an industrial infrared dryer. The product was obtained in the form of lumps of dense porous laminated fibrous xerogel.

An analysis of the resultant product showed it to be protein concentrate containing 75.7% of protein. The resultant dry product swelled quickly in water for 30 minutes and had a hydration coefficient of 2.9.

### Processing Variant B

A countercurrent extraction process similar to that of Variant A was used to treat the same batch of initial granules with the only distinction that the extract was separated from gel-like granules on a coarse screen filter having apertures 1 mm in diameter, followed by pressure being applied to the extract residue in a Russian-made press type PYA-5 that is designed for pressing fruit chips. The product obtained after three rinsing procedures and separation of the sol fraction was dried on an infrared dryer in the conditions of processing variant A.

An analysis of the resultant product showed that its protein content reached 90.7% and that from this viewpoint it could be put in the protein isolate class. It swelled in water within limits and had a hydration coefficient of 3.2 g of H₂O/g of the product, that did not change after the product had been heat-treated for 30 minutes at 75°C, that is, in conditions typical of processing applied to many kinds of meat products. (The reason is the firmly bound water because the hydration coefficient was measured at 5,000 g acceleration and centrifuging time of 30 minutes.) The product contained approximately 1% of soluble substances. This fact is confirmation that the resultant product contains no sol fraction, and, judging from the chemical analysis results, it is a gel fraction, its three-dimensional net built practically by protein molecules.

According to all organoleptic characteristics, this product was neutral in both dry and hydrated conditions. Its taste and flavor were significantly less pronounced than in most protein isolates produced by traditional methods.

### Example 4

This example was performed exactly as Variant B described in Example 3. The difference was in the die diameter that was 3 mm, and that the resultant product had a cylindrical shape around 10 mm in diameter and 10 to 12 mm long, and the extract was separated on a coarse screen filter having apertures 3 mm in diameter.

An analysis of the dried product prepared in this example showed that it also was an isolate containing 81.6% of protein. The difference from the preceding example was that the concentrated protein product had a lower swelling rate and hydration ratio that was 2.4 after 30 minutes of swelling in water (according to tests in a centrifuge). A similar pattern was observed in the case of initial product granules, that is, as the geometrical size of granules selected for swelling increased, their hydration rate decreased.

### Example 5

Comminuted semifat soy meal containing 6.2% of moisture, 50.2% of protein, and 10.5% of fat and a protein solubility index of 46.4% was produced by preliminary extrusion followed by pressing in equipment manufactured by the Insta-Pro company.

The resultant meal was moistened with water and steam to reach a 23% moisture content and was heated to 90°C in the preconditioner of a single-screw extruder from the same company.

The resultant friable mass was extruded in the four zones of a single-screw extruder from the same company. As the moistened mass moved successively through the extruder zones it was heated up gradually by internal friction as it passed the steam barriers provided between the chambers, between the screws and barrels of the extruder, to reach a temperature of 175°C and pressure of 70 kg/cm² in the output chamber. The end matrix of the extruder was provided with a die having apertures 15 mm in diameter. The moist mass was processed in the extruder for 30 seconds.

Large gel lumps shot out of the die turned, as a result of explosion under atmospheric pressure, into a gel-like porous fibrous product that was comminuted in the Camitrol apparatus into granules 2 to 5 mm across. Steam released during these operations carried off a significant proportion of taste and flavor components of the primary material.

The resultant granules and drying following granule formation were as in Variant B of example 3.

An analysis of the chemical composition of the dry product showed that the product could be placed in the protein isolate group because it contained up to 86.6% of protein. When dry, it was an extremely thin fibrous net product having a very high swelling rate. After 15 minutes of swelling in water, the product reached a hydration rate of 2.9 g of H₂O/g of the product (in a test using centrifuging at 5,000 g for 30 minutes).

Although a sufficiently fatty primary material source (10.5% of fat) was used, fat content was not above 0.3% in the concentrated protein product. This is evidence that fat in the sol fraction of these gels was in an emulsified, rather than free, state. Polysaccharides and residual proteins contained in the sol fraction were probably behaving like emulsifiers. This assumption alone can explain the effect observed and the possibility of lipids being extracted by a lyophilic water solvent.

In terms of its organoleptic properties, the resultant concentrated protein product was practically similar to the product prepared on the basis of defatted soy meal. Anyway, a group of unprofessional tasters could not detect distinctions between products prepared from defatted and semifat primary material sources if guided by these properties.

### Example 6

This example was performed exactly as described in Example 3 and Processing Variant A, except that defatted sunflower seed meal containing 59.9% of fat was used in place of soy white petal.

The product prepared according to Variant A and dried in vacuum at a temperature of 50°C had a light-gray color, much lighter than the color of the primary material, with protein content of 68.6% (N X 6.25). For this reason, the resultant gel fraction based on sunflower seed proteins can be placed in the group of protein concentrates. The content of chlorogenic acid in the product was not above 0.04%, and that of soluble sugars was 1.0%. The product dispersed in water produced a suspension of swollen gel particles. If the suspension was held for 1 hour, the system was stratified and gel particles accumulated in the bottom part of the vessel. Holding the suspension over this time, though, did not intensify the product color or produce undesired greenish hues in its color.

## Claims

1. A method for preparing concentrated protein products, wherein gels are produced by gelation at the first stage from aqueous suspensions of primary material sources at a concentration exceeding the critical gelation concentration, and, at the second stage, the resulting gels are further extracted by solvents extracting the sol fraction to yield an end target product that is a gel fraction having a three-dimensional net framework of protein molecules, wherein prior to extraction the surface area of the gels is increased further by water vapor explosion, freezing and subsequent removal of water from the microporous sponge gel, addition of food loosening agents, rapid release of pressure, or the cryotropic effect.

2. The method as claimed in claim 1, wherein the gel is prepared by a thermotropic, crystropic or baro-thermotropic gelation method.

3. Protein products in the form of gel fractions having a three-dimensional net framework of protein molecules obtainable by the method of claim 1 or 2.

## Patentansprüche

1. Verfahren zur Herstellung von konzentrierten Proteinprodukten, wobei auf der ersten Stufe Gele durch Gelieren aus wässrigen Suspensionen von Ausgangsmaterial-Quellen bei einer Konzentration hergestellt werden, welche die kritische Konzentration für Gelieren übersteigt, und auf der zweiten Stufe die erhaltenen Gele weiter durch Lösungsmittel extrahiert werden, welche die Sol-Fraktion extrahieren, um ein Zielprodukt zu erbringen, das eine Gel-Fraktion ist, die eine dreidimensionale Netzstruktur von Proteinmolekülen besitzt, wobei vor der Extraktion die Oberfläche der Gele weiter erhöht wird durch Wasserdampfexplosion, durch Einfrieren und anschließendes Entfernen von Wasser aus dem mikroporösen Schwamm-Gel, durch einen Zusatz von Lebensmittel-Auflockerungsmitteln, durch schnelle Freisetzung von Druck oder durch den kryotropischen Effekt.

2. Verfahren nach Anspruch 1, wobei das Gel durch ein thermotropisches, ein kryotropisches oder ein baro-thermotropisches Gelierungs-Verfahren aufbereitet wird.

3. Protein-Produkte in Form von Gel-Fraktionen mit einer dreidimensionalen Netzstruktur von Proteinmolekülen, erhältlich durch das Verfahren nach Anspruch 1 oder 2.

## Revendications

1. Procédé de préparation de produits de protéine concentrée, dans lequel les gels sont produites par gélification à la première étape à partir de suspensions aqueuses de sources de matières premières à une concentration supérieure à la concentration de gélification critique, et, à la deuxième étape, les gels obtenus sont ensuite extraits par les solvants d'extraction la fraction de sol pour obtenir un produit cible d'extrémité qui est une fraction de gel ayant un cadre filet tridimensionnel de molécules de protéines, dans lequel avant l'extraction de la zone de surface des gels est encore augmentée par l'explosion de vapeur d'eau, l'élimination de gel et subséquente de l'eau à partir de le gel microporeux en éponge, l'addition d'agents d'ameublissement de bouche, une libération rapide de la pression, ou l'effet cryotropic.

2. Procédé selon la revendication 1, dans lequel le gel est préparé par un procédé de gélification thermotrope, cryotropic, ou baro-thermotrope.

3. Produits protéiques sous la forme de fractions de gel ayant un cadre filet tridimensionnel de molécules de protéines pouvant être obtenues par le procédé selon la revendication 1 ou 2.
